Europäisches Patentamt

European Patent Office

Office européen des brevets

(19)

(11) Veröffentlichungsnummer: **0 163 802**
**B1**

# (12) EUROPÄISCHE PATENTSCHRIFT

(45) Veröffentlichungstag der Patentschrift:
**11.05.88**

(21) Anmeldenummer: **85100230.3**

(22) Anmeldetag: **11.01.85**

(51) Int. Cl.⁴: **B 23 F 21/28**

(54) **Werkzeug zum Feinbearbeiten der Flanken von Zahnrädern.**

(30) Priorität: **06.06.84 DE 3421035**

(43) Veröffentlichungstag der Anmeldung:
**11.12.85 Patentblatt 85/50**

(45) Bekanntmachung des Hinweises auf die Patenterteilung:
**11.05.88 Patentblatt 88/19**

(84) Benannte Vertragsstaaten:
**DE FR GB IT**

(56) Entgegenhaltungen:
**DE - B - 2 658 829**

(73) Patentinhaber: **Carl Hurth Maschinen- und Zahnradfabrik GmbH & Co, Moosacher Strasse 36, D-8000 München 40 (DE)**

(72) Erfinder: **Schapp, Udo, Dr. Ing., Untere Seefeldstrasse 41, D-8031 Wessling (DE)**

**Beschreibung**

Die Erfindung betrifft ein Werkzeug zum Feinbearbeiten der Flanken von Zahnrädern nach dem Oberbegriff des Patentanspruchs (siehe DE-B 2 658 829).

Werkzeuge zum Schaben von Verzahnungen werden bekanntermassen mit Nuten in Zahnhöhenrichtung versehen, die die zur Spanabnahme notwendigen Schneidkanten bilden. Das Werkzeug wird lediglich an der Zahnflanke nachgeschliffen, wenn es durch den Einsatz unbrauchbar geworden ist und die Verzahnungsqualität der erzeugten Teile durch Verschleiss des Werkzeuges nachgelassen hat. Die Zahl der möglichen Nachschliffe ist begrenzt durch die endliche Tiefe der Nuten, d.h. wenn keine ausreichende Nutentiefe mehr vorhanden ist, bzw. im Extremfall keine Nuten mehr vorliegen, ist die beschriebene Wirkungsweise des Werkzeuges nicht mehr gegeben.

Je grösser die Nutentiefe ist, desto wirtschaftlicher gestaltet sich also der Einsatz der genannten Werkzeuge.

Die ungenuteten Flankenabschnitte auf den beiden Seiten eines Zahnes stehen sich in etwa gegenüber, desgleichen die Nuten. Die Nutentiefe kann dabei so gross gemacht werden, dass der Nutgrund der einen Seite mit dem der anderen Seite am Kopfkreis zusammentreffen. Eine grössere Nutentiefe ist fertigungstechnisch und aus Stabilitätsgründen nicht möglich. Könnte man die Nutentiefe vergrössern, würde zwar die Zahl der Nachschliffe erhöht werden, aber die wirksamen Flankenabschnitte würden am Zahnkopf ohne seitliche Abstützung bleiben. Da der Schneidvorgang beim Schaben auf einer Zahnlängsleitung beruht, werden die Schneidstollen axial belastet. (Mit Schneidstollen sind die zwischen zwei Nuten befindlichen Teile der Zähne gemeint.) Deswegen ist eine seitliche Abstützung von grosser Wichtigkeit. Nicht abgestützte Abschnitte der Schneidstollen brechen erfahrungsgemäss vorzeitig aus.

Bei der neuerdings zu beobachtenden Tendenz zu kleinmoduligen Zahnrädern und auch zu sogenannten Hochverzahnungen bekommen die entsprechenden Schabwerkzeuge am Zahnkopf eine nur geringe Dicke. Vielfach beträgt sie nur wenige Zehntelmillimeter. Die Nachschärfbarkeit ist dann dementsprechend gering, weil ja auch im nachgeschliffenen Zustand eine gewisse Mindestnutentiefe vorhanden sein muss.

Der Erfindung liegt nun die Aufgabe zugrunde, bei gleichbleibender Zahndicke am Kopf des Werkzeuges die Nutentiefe zu vergrössern ohne dass die Stabilität darunter leidet.

Dies wird mit dem kennzeichnenden Merkmal des Anspruchs möglich, indem man die Nuten und die ungenuteten Flankenabschnitte auf den beiden Seiten eines jeden Zahnes zueinander so versetzt, dass die Mitten der ungenuteten Flankenabschnitte der einen Seite jeweils zumindest annähernd den Mitten der Nuten der anderen Seite entsprechen, und dann die Nutentiefe so gross macht, dass der Nutgrund nahe an der Kopfkante des gegenüberliegenden ungenuteten Flankenabschnitts am Zahnkopf austritt. Die dabei entstehenden, in Umfangsrichtung laufenden Stege, die die ungenuteten Flankenabschnitte, also die Schneidstollen, miteinander verbinden, geben diesen die erforderliche Stabilität in axialer Richtung.

Ein Versetzen der Nuten auf den beiden Flanken eines Zahnes ist bei Schabrädern bekannt, weil es sich mitunter als Folge eines nach bestimmten Richtlinien ausgewählten Versetzens der Schneidkanten ergibt. Die Versetzung ist dabei aber nicht so gross, dass sich Nuten der einen Flanke gegenüber dem ungenuteten Abschnitt der anderen Flanke befindet.

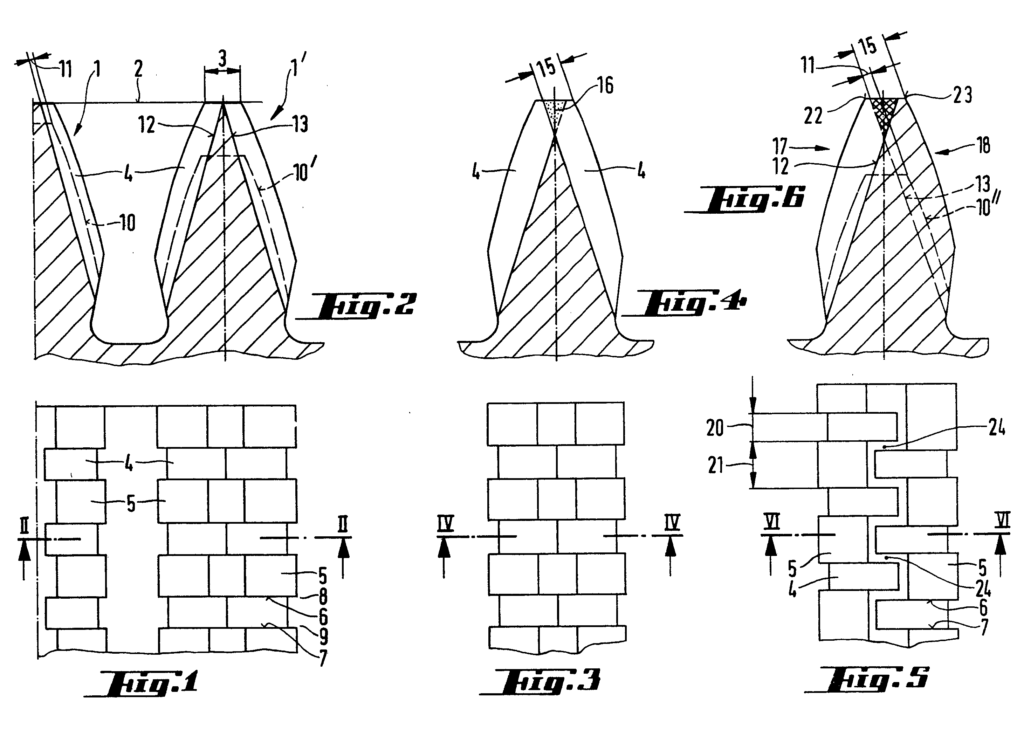

Die Erfindung wird nachstehend anhand eines Ausführungsbeispiels beschrieben, das in den Figuren 5 und 6 in einer Ansicht und in einem Schnitt gezeigt ist. Die Figuren 1 bis 4 dienen zur Veranschaulichung der Ausgangssituation.

Die Figuren 1 und 2 zeigen in einer Draufsicht und in einem Schnitt zwei Zähne 1, 1' eines Schabrades für eine Hochverzahnung in der herkömmlichen Ausführung. Man sieht deutlich, dass der Zahn 1, 1' am Kopfkreis 2 nur eine sehr geringe Dicke 3 hat. Die Zahnflanken sind mit vom Kopf zum Fuss verlaufenden Nuten 4 versehen, zwischen denen ungenutete Flankenabschnitte 5 bleiben. Dabei entstehen zwischen den Nutwänden 6, 7 und den Flankenabschnitten 5 Schabkanten 8, 9. Sind diese Schabkanten 8, 9 abgenutzt, müssen die Flanken nachgeschliffen werden. Die Nachschleifbarkeit der Nuten 4 ist gering, weil auch im nachgeschliffenen Zustand (gestrichelte Linie 10) eine Mindestnutentiefe 11 vorhanden sein muss. Ein häufigeres Nachschleifen ist möglich, wenn die Nuten 4 so tief gemacht werden, dass die Nutgründe 12, 13 unter Bildung eines spitzen Winkels am Zahnkopf austreten, wie das beim Zahn 1' gezeigt ist. Der nachgeschliffene Zustand ist hier mit 10' bezeichnet.

Eine weitere Steigerung der Nachschleifbarkeit wäre theoretisch bei der in den Figuren 3 und 4 gezeigten Anordnung der Nuten möglich. Bei dieser Nuttiefe 15 würden die Flankenabschnitte 5 jedoch am Zahnkopf ohne seitliche Abstützung sein (vgl. die gepunktete Fläche 16 in Figur 4) und leicht ausbrechen.

Um diese grösstmögliche Nuttiefe 15 ausnützen zu können, sollen die Nuten 4 und die Flankenabschnitte 5 auf den beiden Zahnseiten 17, 18 erfindungsgemäss gegeneinander versetzt sein. Diese Ausführung zeigen die Figuren 5 und 6. Dabei entspricht die Mitte einer Nut 4 auf der Seite 17 etwa der Mitte eines ungenuteten Flankenabschnitts 5 auf der anderen Seite 18 und umgekehrt. Die Breite 20 der Nuten 4 ist kleiner als die Breite 21 der Abschnitte 5. Bei der grossen Nuttiefe 15 tritt jeder Nutgrund 12, 13 in der Nähe einer Kopfkante 22, 23 aus, wodurch sich die Nuten im Bereich des Zahnkopfes zwar teilweise überdecken, wegen der gegenüber der Breite 21 der Abschnitte 5 geringeren Breite 20 aber durch Stege 24 voneinander getrennt sind. Diese Stege 24 verbinden die ungenuteten Flankenabschnitte 5 der Seite 17 mit denen der anderen Seite 18. Die Seitenflächen der Stege (kreuzschraffierte Fläche in Figur 6) sind Teile der Nutwände 6, 7. Der maximal erreichbare nachgeschliffene Zustand unter Berücksichtigung der Mindestnutentiefe 11 ist durch eine mit 10'' bezeichnete gestrichelte Linie dargestellt. Es ist deutlich erkennbar, dass die Nachschleifbarkeit dieser Ausführung gegenüber der Ausführung nach den Figuren 1, 2 erheblich grösser ist.

Die Darstellungen sind nur als schematisch anzusehen, nicht als massstabgetreue Abbildungen. Dabei wurde ein geradverzahntes Werkzeug herangezogen. Die Erfindung ist jedoch ohne weiteres auch bei schrägverzahnten zahnrad- und zahnstangenförmigen Werkzeugen anwendbar.

## Patentanspruch

Zahnrad- oder zahnstangenförmiges Werkzeug zum Feinbearbeiten der Flanken von Zahnrädern durch Schaben, in dessen Zahnflanken jeweils mehrere vom Kopf zum Fuss verlaufende an den gegenüberliegenden Flanken eines Werkzeugzahnes gegeneinander versetzte Nuten (4) eingearbeitet sind, dadurch gekennzeichnet, dass an jedem Zahn jeder Nut (4) auf der einen Seite (17) ein breiterer ungenuteter Flankenabschnitt (5) auf der anderen Seite (18) im wesentlichen mittengleich gegenüberliegt, und dass der Nutgrund (12, 13) jeweils bis nahe an die Kopfkante (22, 23) des gegenüberliegenden ungenuteten Flankenabschnitts (5) reicht, wobei jede Nut (4) der einen Seite (17) im Bereich des Zahnkopfes von der benachbarten Nut (4) der anderen Seite (18) durch einen Steg (24) getrennt ist, dessen Seitenflächen Teile der Nutwände (6, 7) sind.

## Claim

A gear-shaped or rack-shaped tool for finishing the flanks of gears by shaving, in each of the tooth flanks of which a plurality of grooves (4) are formed, which grooves extend from top to bottom and are offset relative to one another on the oppositely disposed flanks of a tool tooth, characterized in that on each tooth opposite each groove (4) on the one side (17) a wider ungrooved flank section (5) is arranged on the other side (18) so as to have essentially the same centre as the groove (4), and in that the groove base (12, 13) extends in each case into the proximity of the tip edge (22, 23) of the oppositely disposed ungrooved flank section (5), each groove (4) of the one side (17) being separated in the region of the tooth tip from the adjacent groove (4) of the other side (18) by a web (24), the lateral faces of which are the groove walls (6, 7).

## Revendication

Outil en forme de roue dentée ou de crémaillère pour l'usinage fin, par repassage, des flancs de roues dentées, outil dont les flancs de dents comportent respectivement plusieurs rainures (4), décalées les unes par rapport aux autres sur les flancs opposés d'une dent de l'outil et allant de la tête au pied de cette dent, outil caractérisé en ce que, sur chaque dent de cet outil, à chaque rainure (4) sur l'un (17) des côtés de cette dent, correspond sur l'autre côté (18) une partie de flanc (5), plus large et non rainurée, dont le milieu coïncide essentiellement avec celui de la rainure, randis que le fond (12, 13) de la rainure s'étend respectivement jusqu'au voisinage de l'arêt de tête (22, 23) de la partie de flanc (5) non rainurée opposée, chaque rainure (4) de l'un (17) des côtés, étant, au voisinage de la tête de la dent, séparée de la rainure voisine (4) de l'autre côté (18) de la dent par une nervure (24) dont les faces latérales sont des parties (6, 7) des parois des rainures.

Fig.1 · Fig.2 · Fig.3 · Fig.4 · Fig.5 · Fig.6